# EUROPEAN PATENT APPLICATION

(11) **EP 4 116 608 A1**
(43) Date of publication of application: **11.01.2023**
(21) Application number: 21461567.6
(22) Date of filing: 09.07.2021
(51) Int. Cl.: F16K 1/38, F16K 1/42, F16K 25/00, F16K 15/06

(54) **VALVE**

(71) Applicant: Goodrich Corporation, Charlotte, NC 28217 (US)
(72) Inventor: BIELE , Micha, 56-500 Wroclaw (PL); CIERNIAK, Dawid, 53-656 Wroc aw (PL); BOGGS, Clifton Randolph, Springfield, OH Ohio 45506 (US)
(74) Representative: Dehns

(57) **Abstract**

A valve (2) is provided, the valve comprising: a housing (10); and a valve element (18), the housing comprising a cylindrical bore (12) defining an axial direction and an annular shoulder (38) extending into the cylindrical bore, wherein the valve element is axially moveable within the cylindrical bore so as to move the valve element between a closed position in which the valve element engages with the annular shoulder and an open position in which the valve element is spaced from the annular shoulder,
wherein, in the open position, fluid flowing into the valve in a first axial direction may flow through one or more apertures (32) provided in the valve element and through the valve, wherein the valve element and the annular shoulder are configured to be in continuous contact along an annular contact surface when in the closed position so as to seal against fluid flow through the valve.

## Description

### TECHNICAL FIELD

The present disclosure relates to valves as may be used, for example, in hydraulic systems such as aircraft wheel braking systems.

### BACKGROUND

Valves, such as poppet valves, are used in a wide variety of applications. One such application is in aircraft, where valves are used in hydraulic wheel braking control systems.

In some applications, for example in hydraulic aircraft wheel braking control systems, where the valve is subjected to a harsh environment, there is a need to provide a valve which may form an effective and lasting seal against fluid flow whilst being able to withstand the impact of environment factors including extreme temperatures or fluctuations in temperature and the presence of contaminants in the environment and/or in fluid flowing through the valve. Further, it is desirable to provide a valve which has a relatively long service life and which can withstand the effect of aggressive fluids such as, for example, some hydraulic fluids used in the aerospace industry.

It is also desirable in many applications, such as for example in aerospace, to provide valves which will not become blocked or jammed due to contaminants found either in the external environment or in fluid flowing through the valve. Accordingly, new valves which can provide an effective seal in a harsh environment and which are less likely to degrade over time or become jammed are sought.

### SUMMARY

The present disclosure provides a valve comprising:
a housing; and
a valve element,
the housing comprising a cylindrical bore defining an axial direction and an annular shoulder extending into the cylindrical bore,
wherein the valve element is axially moveable within the cylindrical bore so as to move the valve element between a closed position in which the valve element engages with the annular shoulder and an open position in which the valve element is spaced from the annular shoulder,
wherein, in the open position, fluid flowing into the valve in a first axial direction may flow through one or more apertures provided in the valve element and through the valve,
wherein the valve element and the annular shoulder are configured to be in continuous contact along an annular contact surface when in the closed position so as to seal against fluid flow through the valve.

In any example of the disclosure, the valve element may comprise a conical or frustoconical portion for engaging with the annular shoulder.

In any example of the disclosure, the annular shoulder may comprise a chamfered surface for engaging with the valve element.

In any example of the disclosure, the angle of the conical or frustoconical portion relative to a radial direction may be greater than the angle of the chamfered surface relative to the radial direction.

In any example of the disclosure, the continuous contact along the annular contact surface between the valve element and the shoulder may be provided by rotating the valve element and the shoulder relative to each other whilst pushing the valve element and the shoulder together during manufacture of the valve. Further, if required an abrasive may be placed between the valve element and the shoulder whilst rotating the valve element and the shoulder relative to each other.

In any example of the disclosure, the housing and/or the valve element may be made of metal, and / or the hardness of the valve element may be greater than the hardness of the annular shoulder at least along the annular contact surface between the valve element and the shoulder.

In any example of the disclosure, the valve may further comprise biasing means for biasing the valve element into engagement with the annular shoulder.

In any example of the disclosure, the valve may further comprise an annular skirt projecting axially from the valve element and extending parallel to and into the cylindrical bore of the housing.

In any example of the disclosure, the valve element may further comprise:
a radially outer axial wall;
one or more grooves in the radially outer axial wall; and /or
a surface extending substantially perpendicular to the axial direction and radially inward from the radially outer axial wall so as to stop or reduce contaminant particles becoming stuck between the valve element and the housing.

From a further aspect, the present disclosure may provide a hydraulic system comprising a valve as described in any of the above examples.

In any example of the disclosure, the hydraulic system may comprise a hydraulic aircraft wheel braking system. The valve may connect a hydraulic power source to a hydraulic accumulator.

From a still further aspect, the present disclosure may provide a method of manufacturing a valve comprising:
forming a housing comprising a cylindrical bore defining an axial direction and an annular shoulder extending into the cylindrical bore;
forming a valve element configured to be axially moveable within the cylindrical bore so as to move the valve element between a closed position in which the valve element engages with the annular shoulder and an open position in which the valve element is spaced from the annular shoulder,
wherein, in the open position, fluid flowing into the valve in a first axial direction may flow through one or more apertures provided in the valve element and through the valve,
wherein the valve element and the annular shoulder are configured to be in continuous contact along an annular contact surface when in the closed position so as to seal against fluid flow through the valve;
positioning the valve element in the cylindrical bore; and
rotating the valve element and the shoulder relative to each other whilst pushing the valve element and the shoulder together so as to configure the valve element and the shoulder to be in continuous contact along the annular contact surface when the valve is in the closed position.

In any example of the disclosure, the method may further comprise:
applying an abrasive between the valve element and the shoulder prior to rotating the valve element and the shoulder relative to each other.

In any example of the disclosure, the abrasive may be applied to the valve element and / or the shoulder.

In any example of the disclosure, the abrasive may be applied along the annular contact surface.

### BRIEF DESCRIPTION OF DRAWINGS

An example of this disclosure will now be described, by way of example only, with reference to the accompanying drawings in which:
Figure 1 is a schematic representation of a hydraulic system comprising a valve according to an example of the disclosure;
Figure 2 shows a schematic vertical cross sectional view through a valve in accordance with this disclosure, in a first, open position;
Figure 3 shows a schematic vertical cross sectional view through the valve of Figure 2, in a second, closed position;
Figure 4 shows a schematic vertical cross sectional view through an apparatus used in manufacturing a valve according to the disclosure; and
Figure 5 shows an enlarged detailed view of part of the valve 2 of Figure 3 shown at X.

### DETAILED DESCRIPTION

This disclosure concerns the construction of a valve which may be used in a variety of applications including in hydraulic systems. The valve may advantageously be employed as a Brake Control System Check Valve in aircraft braking systems such as an aircraft wheel hydraulic braking system. The valve may be a poppet valve and may be particularly advantageously employed in applications in which the valve is exposed to a wide range of temperatures or in which a working fluid passing through the valve is very aggressive such that rubber or elastomeric seals such as elastomeric seats or O-rings could be destroyed. In such applications, avoiding the use of rubber or elastomeric seals would be advantageous. One such example of this would be an aircraft wheel hydraulic braking system using Red oil, for example Mil-PRF-5606 or Mil-H-83282, or Skydrol^{®}. Of course, the valve is not limited to such applications and it may be more widely used.

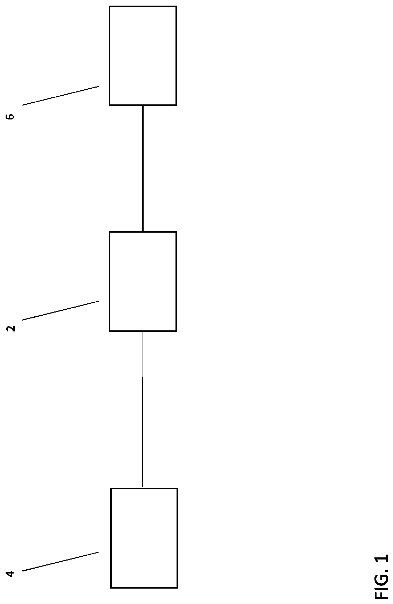

Figure 1 is a schematic diagram of part of an aircraft wheel hydraulic braking system including a valve according to an example of the disclosure. The hydraulic braking system comprises a valve 2 connected between a hydraulic accumulator 4 and a hydraulic power source 6. Hydraulic working fluid such as, for example, Red oil or Skydrol^{®} may flow between the hydraulic accumulator 4 and the hydraulic power source 6 via the valve 2. As will be described in further detail below, the valve 2 is configured to allow flow of hydraulic working fluid between the hydraulic accumulator 4 and the hydraulic power source 6 in only one direction from the hydraulic power source 6 to the hydraulic accumulator 4 so as to keep the hydraulic accumulator 4 charged.

In an aircraft wheel hydraulic braking system of the type described, the valve 2 may be required to have a very low internal leakage. In reality, it may not be possible to achieve zero leakage but leakage as close to zero as possible is desirable. In one example, the internal leakage for the valve 2 may be required to be below about 1 drop per minute (for example, between about 0.05 and 0.1 cm³, for example about 0.07 cm³) when tested at a low pressure of, for example, below about 100psi (about 690 KPa).

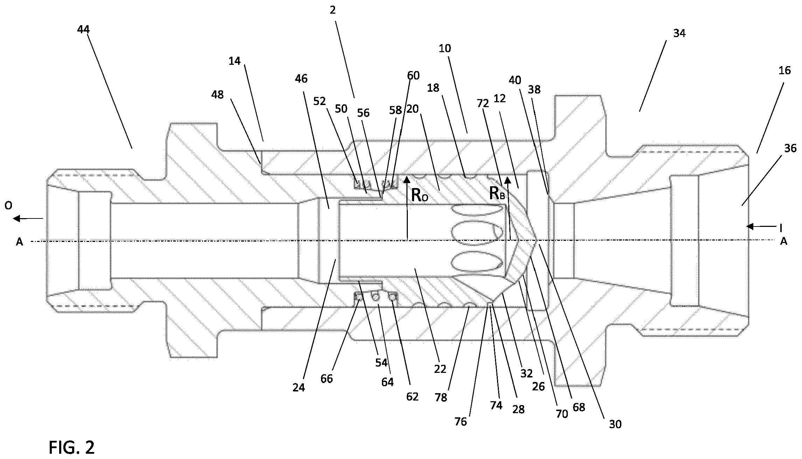

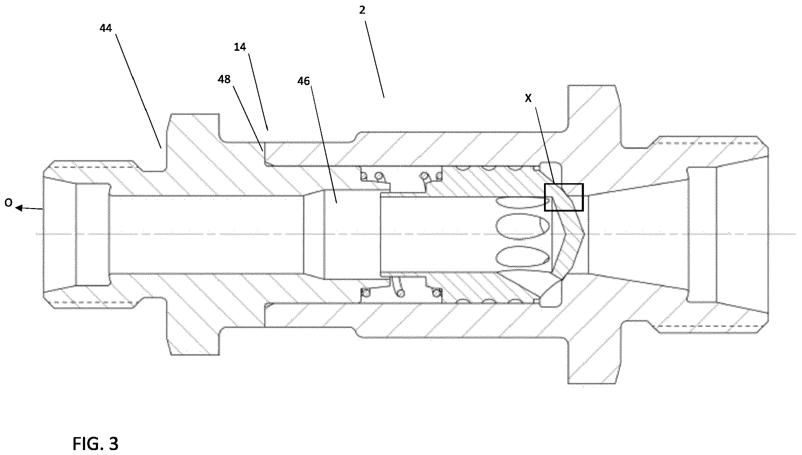

Figures 2 and 3 illustrate a valve 2 (for example, a poppet valve) according to an example of this disclosure and suitable for use in the aircraft wheel hydraulic braking system of Figure 1.

The valve 2 comprises a housing 10. In the example shown, the housing 10 is cylindrical and extends along a longitudinal axis A-A which defines an axial direction. A cylindrical bore 12 having a radius R_{B} extends along the housing 10 from a first end 14 thereof towards the second opposite end 16 thereof.

The valve 2 further comprises a valve element 18 (for example, a poppet). The valve element 18 is axially moveable within the cylindrical bore 12 of the housing 10. In the example shown, the valve element 18 comprises a cylindrical body 20 having an outer radius Ro equal to or slightly less than the radius R_{B} of the cylindrical bore 12 of the housing 10 such that the cylindrical body 20 is slidably supported within the cylindrical bore 12 for axial movement relative thereto. A cylindrical bore 22 extends along the length of the cylindrical body 20 as seen in Figures 2 and 3.

A first end 24 of the cylindrical body 20 is open to allow fluid flowing through the cylindrical bore 22 of the valve element 18 to flow out of the first end 24. The valve element 18 further comprises an end portion 26 provided at the second, opposite end 28 of the cylindrical body 20. The end portion 26 could, for example, comprise a disc extending across the second, opposite end 28 of the cylindrical body 20 so as to close the second end 28. In various examples of the disclosure, the end portion 26 may extend at an oblique angle to the longitudinal axis A-A. For example, the end portion may be conical or frustoconical in shape or may comprise a combination of axially arranged conical and/or frustoconical portions extending at different angles to the longitudinal axis A-A. Thus, the base of the end portion 26 may be annular and may be joined to the cylindrical body 20, the end portion 26 extending from the second, opposite end 28 of the cylindrical body 20 to an apex 30 in a direction away from the first end 24.

As seen in Figure 2, at least one aperture 32 is provided to extend through the end portion 26 and/or the cylindrical body 20 of the valve element 18. The aperture 32 is positioned so as to allow flow of fluid through the aperture 32 and into the cylindrical bore 22 of the valve element 18 when the valve is in the first, open position.

The housing 10 further comprises an attachment portion 34 provided adjacent the second end 16 of the housing for allowing the valve 2 to be attached to tubing or other components for flow of fluid therethrough. The attachment portion 34 includes an inner axially extending bore 36 for the flow of fluid therethrough. In the example shown, the inner axially extending bore 36 tapers inwardly so as to narrow from a flow inlet I at the second end 16 of the housing 10 towards the cylindrical bore 12 of the housing 10.

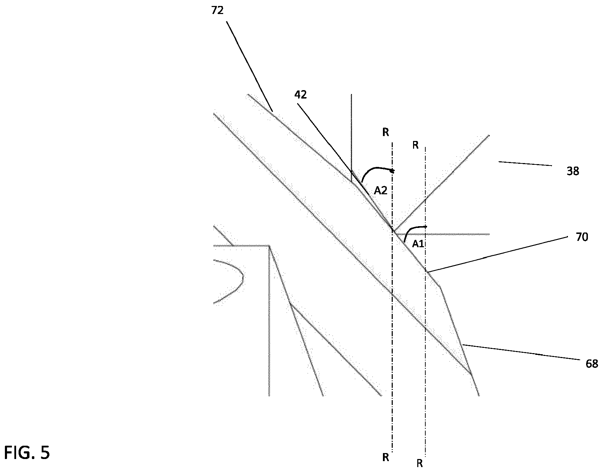

A shoulder 38 is formed at the junction between the inner axially extending bore 36 and the cylindrical bore 12 of the housing 10. As seen in Figures 2 and 3, the shoulder 38 extends approximately radially inwardly from the cylindrical bore 12 of the housing 10 so as to form an annular radial surface 40 extending into and around the cylindrical bore 12. A chamfered portion 42 extending at an angle of between about 30° and 60°, or between about 40° and 50°, or at about 45° to a radial direction may be provided at the radially inner edge of the radial surface 40 (where the radial direction R, see Figure 5, is perpendicular to the longitudinal axis A-A).

The valve 2 further comprises a connector portion 44 having a radially inner cylindrical bore 46 joined to and extending coaxially with the cylindrical bore 12 of the housing 10. The connector portion 44 comprises a cut-out 48 from a radially outer surface of thereof so as to form a step between the radially outer surface and a radially inner step portion. The cut-out 48 and radially inner step portion mate with the first end 14 of the housing 10 such that the connector portion 44 extends axially into the cylindrical bore 12 of the housing 10 beyond the cut-out 48. An annular projection 50 extends axially from the radially inner step portion in the connector portion 44 to form a recessed portion 52 in the connector portion 44.

In the example shown in Figure 2, the valve element 18 includes an annular skirt 54 extending from the first end 24 of the cylindrical body 20 of the valve element 18. The annular skirt 54 is configured to extend axially into and radially inward of the cylindrical bore 46 of the connector portion 44. When the valve 2 is in the first, open position, the free end 56 of the annular projection 50 abuts against a radial surface 58 extending between the annular skirt 54 and a radially outer surface 60 of the valve element 18 formed by a cut-out 62 in the cylindrical body 20 of the valve element 18.

An annular chamber 64 is formed between the housing 10, the annular projection 50 and the cut-out 62 in the cylindrical body 20 of the valve element 18. Biasing means such as, for example a compression spring 66, are provided in the annular chamber 64 and act to push the valve element 18 away from the connector portion 44 towards the shoulder 38 of housing 10. Thus, when no other forces act on the valve 2, the valve 2 will be held in the second, closed position shown in Figure 3 in which the end portion 26 of the valve element 18 is held against the shoulder 38 of the housing 10 . In this position, the aperture 32 is located between the housing 10 and the seal formed by the contact between the end portion 26 and the shoulder 38 so that fluid cannot flow from the inlet I through the aperture 32 and into the valve element 18.

The valve 2 could be opened by various means such as, for example, by an electromagnetic actuator. In the example shown, no such actuator is provided. Rather, hydraulic fluid flowing from the inlet I and impacting on the end portion 26 of the valve element 18 acts to push the valve element 18 axially away from the inlet I against the action of the compression spring 66. When the valve element 18 has moved to the first, open position shown in Figure 2, the aperture 32 is no longer obstructed and so hydraulic fluid may flow through the aperture 32 in the valve element 18, such that fluid may flow from the inlet I through the valve 2 and out through an outlet O in the connector portion 44.

To form an effective seal when the valve 2 is in the second, closed position, the end portion 26 of the valve element 18 and the shoulder 38 of the housing 10 are configured to be in continuous contact along an annular contact surface (not shown). It will be understood that the annular contact surface extends fully around the longitudinal axis A-A such that a very effective seal is provided both against ingress of fluid into the valve element 18 from the inlet I and against fluid flowing in an opposite direction from the outlet O to the inlet I.

The continuous contact along the annular contact surface between the end portion 26 of the valve element 18 and the shoulder 38 of the housing 10 may be provided by using a lapping process during manufacture of the valve 2.

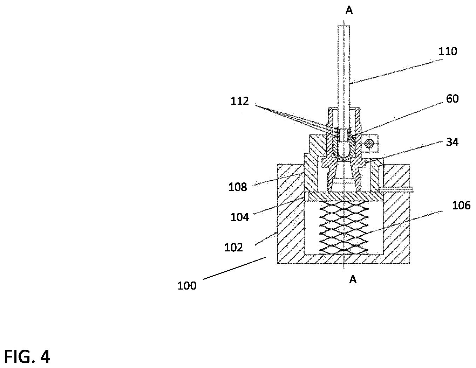

As seen in Figure 4, the lapping process may be carried out after the constituent components of valve 2 have been manufactured but before assembly of the constituent components to form the valve 2. This may be done by placing the housing 10 of valve 2 into a lapping tool 100. The tool 100 includes a tool housing 102 in which a platform 104 is supported on a biasing element such as a helical spring 106. A clamping device 108 is provided in the tool housing 102 which is designed and configured to hold the housing 10 of the valve 2 such that the longitudinal axis A-A extends substantially perpendicular to the platform 104 (in a vertical direction in the example shown) and the inlet I is located adjacent the platform 104. The clamping device 108 can be fastened to the housing 10 so as to hold the housing 10 against rotation relative to the tool housing 102.

An abrasive substance may then be applied to the shoulder 38 of the housing 10 and/or to the end portion 26 of the valve element 18 such that the abrasive substance will be located at least along the annular contact surface over which the shoulder 38 and the end portion 26 are in continuous contact when the valve 2 is in the second, closed position. It will be understood that any suitable abrasive substance could be used. In one example of the disclosure, the abrasive substance may comprise a diamond paste.

In one example, the abrasive substance (for example, the diamond paste) may be applied to the end portion 26 of the valve element 18 and the valve element 18 may then be inserted into the housing 10 such that the shoulder 38 and the end portion 26 are in contact with each other. A rotary shaft 110 may then be inserted into the valve element 18 at the first end 24 thereof. The rotary shaft 110 is attached to the valve element 18 and configured to drive rotation of the valve element 18 about the longitudinal axis A-A relative to the housing 10. A spring or biasing means 112 is provided on the rotary shaft 110 and the lapping tool 100 is configured to apply a force along the longitudinal axis A-A so as to push the shoulder 38 of the housing 10 towards the valve element 18.

The lapping process is then carried out by rotating the valve element against the shoulder 38 such that a continuous smooth surface is formed on both the end portion 26 and the shoulder 38 along the annular contact surface over which the shoulder 38 and the end portion 26 are in continuous contact. The continuous contact between shoulder 38 and the end portion 26 may be achieved by selecting the speed of rotation of the valve element 18 relative to the shoulder 38, the force applied to push the valve element 18 and the shoulder 38 together and the time for which the valve element 18 is rotated relative to the shoulder 38 as required. Further, the end portion 26 of the valve element 18 may be formed of a harder material than that of the shoulder 38. It will be understood that the seal provided by contact between the valve element 18 and the shoulder 38 can therefore be significantly improved over a valve manufactured using alternative processes. For example, the seal produced by mating contact of the valve element 18 and the shoulder 38 when the above described lapping process is used will remain consistent irrespective of the rotational position of the valve element 18 relative to the housing 10 or the shoulder 38.

In addition, the lapping process described above may be automated and is not dependent on human skill or detailed machining processes, thus improving the repeatability and accuracy as well as efficiency of manufacture of a valve according to the disclosure.

In some examples of the disclosure, the chamfered portion 42 of the shoulder 38 is in contact with the end portion 26 of the valve element 18 when the valve 2 is in the second, closed position. The end portion 26 may comprise a conical or frustoconical portion or a combination of conical and/or frustoconical portions extending at different angles to the longitudinal axis A-A as described above. The chamfered portion 42 may extend at a shallower angle relative to a radial direction than the angle at which the portion of the end portion which is adapted to contact the chamfered portion 42 extends relative to the radial direction. Stated differently, the angle formed at the intersection between two diametrically opposed surfaces of the chamfered portion 42 may be greater than the angle formed at the intersection between two diametrically opposed surfaces of the portion of the end portion which is adapted to contact the chamfered portion 42. This will allow contact between the end portion and the chamfered portion 42 to be at a chosen radius on the chamfered portion 42, thus improving the accuracy of the seal provided by seating the end portion 26 against the chamfered portion 42.

In the example shown in Figures 2 and 3 for example, and as shown in further detail in Figure 5, the end portion 26 of the valve element 18 comprises a first conical portion 68, a second frustoconical portion 70 and a third frustoconical portion 72. The first conical portion 68 extends from the apex 30 towards the cylindrical body 20 of the valve element 18. The second, frustoconical portion 70 is joined to the first conical portion 68 and extends between the first conical portion 68 and the third, frustoconical portion 72. The third, frustoconical portion 72 extends between and is joined to the second, frustoconical portion 70 and the second end 28 of the cylindrical body 20 of the valve element 18. The first conical portion 68 is shallower (it extends at a smaller angle relative to the radial direction) than the second, frustoconical portion 70. The second, frustoconical portion 70 is again shallower (it extends at a smaller angle relative to the radial direction) than the third, frustoconical portion 72. As seen in Figures 2 and 3, the aperture 32 extends through the third, frustoconical portion 72, and may be angled approximately perpendicular thereto.

As seen in further detail in Figure 5, in one example, the valve 2 is configured such that the chamfered portion 42 of the shoulder 38 forms a valve seat and/or is in contact with the second, frustoconical portion 70 of the valve element 18 when the valve 2 is in the second, closed position. As described above, the angle A1 of the second, frustoconical portion 70 of the valve element 18 relative to the radial direction (shown by line R-R) is greater than angle A2 of the chamfered portion 42 relative to the radial direction so as to improve the efficacy and accuracy of the seal provided by contact between the chamfered portion 42 of the shoulder 38 and the second, frustoconical portion 70 of the valve element 18 when the valve 2 is in the second, closed position.

Although they could be formed from other materials, in any example of the disclosure, the housing and the valve element may be formed of metal such as for example, a heat treated stainless steel or a similar material. In some examples of the disclosure, the valve element 18 may be formed of a material or metal having a greater hardness than the material or metal of the shoulder 38 or valve seat.

The valve according to at least some examples of the disclosure will allow a robust seal to be provided by the contact between the housing and the valve element. As no elastomeric components are required to produce the seal, it can survive operation for a significant length of time in hostile environments (such as for example at extreme or varying temperatures and/or in which hostile working fluids such as Red oil or Skydrol may be used).

The valve 2 may further be required to operate in a contaminated environment such as is found for example in aerospace applications. In such environments, contaminants found in the fluid flowing through the valve could cause the valve to become blocked or jammed thus causing a failure. The valve 2 according to various examples of the disclosure may therefore be provided with various features to reduce the ingress of contaminants into the valve and to reduce the likelihood of any contaminants becoming stuck in the valve 2.

As seen for example in Figure 2, an undercut 74 may be provided in the radially outer surface of the cylindrical body 20 of the valve element 18 adjacent the end portion 26. The undercut 74 provides a perpendicular surface 76 perpendicular and joined to the radially outer surface of the cylindrical body 20 and so reduces the likelihood of contaminant particles becoming wedged between the end portion 26 and the cylindrical bore 12 in the housing 10. The perpendicular surface 76 further reduces the likelihood of contaminant particles being able to flow along the end portion 26 at the join with the cylindrical body 20 of the valve element 18 and become wedged between the cylindrical body 20 and the housing 10.

One or more annular or helical grooves 78 can be provided in the radially outer surface of the cylindrical body 20 of the valve element 18 (i.e. in a radially outer axial wall of the valve element) as seen for example in Figure 2. The grooves 78 may act to trap any contaminant particles in a fluid which flows between the cylindrical body 20 and the housing 10.

As further shown in Figures 2 and 3 and described above, an annular skirt 54 extends from the valve element 18 axially into and radially inward of the cylindrical bore 46 of the connector portion 44 of the valve 2. Thus, any contaminants in a fluid flowing from the valve element 18 and into the connector portion 44 will not impact against radial surfaces or recesses in which they may become trapped. More specifically, the annular skirt 54 may stop contaminant particles from entering the annular chamber 64 in which the compression spring 66 is provided, thus reducing the likelihood of contaminant particles degrading the effectiveness of the compression spring 66 or blocking movement of the valve member 18 relative to the connector portion 44 and/or housing 10. In addition or alternatively, the annular skirt 54 may provide a smooth flow surface for fluid flowing through the valve thus improving the performance thereof.

It will be appreciated that the example valves described herein have a number of advantages over the prior art valve systems. Specifically, the valve 2 does not need any elastomeric sealing elements as the continuous contact between the valve element and the shoulder along an annular contact surface provides a secure seal even for environments in which an almost zero (e.g. 1 drop per minute) leakage rate is required. The various features of the example valves 2 described above also allow the damaging effects of contaminant particles in fluids flowing through the valve 2 to be mitigated against, thus improving reliability and efficacy of the valves according to the disclosure.

The above description is of an exemplary embodiment only, and it will be clear that modifications may be made to the embodiment without departing from the scope of the disclosure.

Also, while the valve 2 has been disclosed as being used in an aircraft wheel brake system, it may of course be used in any application where such a valve is required. Examples of such applications may include automotive brakes and elevator, escalator and moving walkway brakes.

## Claims

1. A valve comprising:
a housing; and
a valve element,
the housing comprising a cylindrical bore defining an axial direction and an annular shoulder extending into the cylindrical bore,
wherein the valve element is axially moveable within the cylindrical bore so as to move the valve element between a closed position in which the valve element engages with the annular shoulder and an open position in which the valve element is spaced from the annular shoulder,
wherein, in the open position, fluid flowing into the valve in a first axial direction may flow through one or more apertures provided in the valve element and through the valve,
wherein the valve element and the annular shoulder are configured to be in continuous contact along an annular contact surface when in the closed position so as to seal against fluid flow through the valve.

2. A valve as claimed in claim 1, wherein the valve element comprises a conical or frustoconical portion for engaging with the annular shoulder.

3. A valve as claimed in claim 1 or 2, wherein the annular shoulder comprises a chamfered surface for engaging with the valve element.

4. A valve as claimed in claim 3 when dependent on claim 2, wherein the angle of the conical or frustoconical portion relative to a radial direction is greater than the angle of the chamfered surface relative to the radial direction.

5. A valve as claimed in any preceding claim, wherein the continuous contact along the annular contact surface between the valve element and the shoulder is provided by rotating the valve element and the shoulder relative to each other whilst pushing the valve element and the shoulder together during manufacture of the valve,
wherein, optionally, an abrasive is placed between the valve element and the shoulder whilst rotating the valve element and the shoulder relative to each other.

6. A valve as claimed in any preceding claim, wherein the housing and/or the valve element are made of metal, and / or
wherein the hardness of the valve element is greater than the hardness of the annular shoulder at least along the annular contact surface between the valve element and the shoulder.

7. A valve as claimed in any preceding claim, further comprising biasing means for biasing the valve element into engagement with the annular shoulder.

8. A valve as claimed in any preceding claim, further comprising an annular skirt projecting axially from the valve element and extending parallel to and into the cylindrical bore of the housing.

9. A valve as claimed in any preceding claim, the valve element further comprising:
a radially outer axial wall;
one or more grooves in the radially outer axial wall; and /or
a surface extending substantially perpendicular to the axial direction and radially inward from the radially outer axial wall so as to stop or reduce contaminant particles becoming stuck between the valve element and the housing.

10. A hydraulic system comprising a valve as claimed in any preceding claim.

11. A hydraulic system as claimed in claim 10, wherein the hydraulic system comprises a hydraulic aircraft wheel braking system,
wherein optionally, the valve connects a hydraulic power source to a hydraulic accumulator.

12. A method of manufacturing a valve comprising:
forming a housing comprising a cylindrical bore defining an axial direction and an annular shoulder extending into the cylindrical bore;
forming a valve element configured to be axially moveable within the cylindrical bore so as to move the valve element between a closed position in which the valve element engages with the annular shoulder and an open position in which the valve element is spaced from the annular shoulder,
wherein, in the open position, fluid flowing into the valve in a first axial direction may flow through one or more apertures provided in the valve element and through the valve,
wherein the valve element and the annular shoulder are configured to be in continuous contact along an annular contact surface when in the closed position so as to seal against fluid flow through the valve;
positioning the valve element in the cylindrical bore; and
rotating the valve element and the shoulder relative to each other whilst pushing the valve element and the shoulder together so as to configure the valve element and the shoulder to be in continuous contact along the annular contact surface when the valve is in the closed position.

13. A method of manufacturing a valve as claimed in claim 12, further comprising:
applying an abrasive between the valve element and the shoulder prior to rotating the valve element and the shoulder relative to each other.

14. A method of manufacturing a valve as claimed in claim 13, wherein the abrasive is applied to the valve element and / or the shoulder.

15. A method of manufacturing a valve as claimed in claim 14, wherein the abrasive is applied along the annular contact surface.
